(19) **Europäisches Patentamt / European Patent Office / Office européen des brevets**

(11) **EP 3 835 020 B1**

(12) **EUROPEAN PATENT SPECIFICATION**

(45) Date of publication and mention
of the grant of the patent:
**28.08.2024 Bulletin 2024/35**

(21) Application number: **19306620.6**

(22) Date of filing: **10.12.2019**

(51) International Patent Classification (IPC):
**B28B 19/00** *(2006.01)*    **F16L 11/12** *(2006.01)*
**F16L 41/02** *(2006.01)*    **F16L 43/00** *(2006.01)*
**F16L 11/06** *(2006.01)*

(52) Cooperative Patent Classification (CPC):
**B28B 19/0092; F16L 11/06; F16L 11/121;**
**F16L 41/023; F16L 43/008**

(54) **HOSE**

SCHLAUCH

TUYAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.06.2021 Bulletin 2021/24**

(73) Proprietor: **SAINT-GOBAIN PLACO**
**92400 Courbevoie (FR)**

(72) Inventors:
• **JAFFEL, Hamouda**
  **93410 VAUJOURS (FR)**

• **RANZANI DA COSTA, Andrea**
  **93410 VAUJOURS (FR)**
• **KAMLER, Radomir**
  **180 00 Praha 8 (CZ)**
• **SAINGIER, Guillaume**
  **93300 Aubervilliers (FR)**

(74) Representative: **Murgitroyd & Company**
**165-169 Scotland Street**
**Glasgow G5 8PL (GB)**

(56) References cited:
**CA-A1- 3 074 828      JP-U- S56 171 493**
**US-A1- 2004 079 428   US-A1- 2019 154 181**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Field of the Invention

The present invention relates to a hose, and more specifically to a hose for use in the production of a building product from a gypsum slurry.

## Background to the Invention

The production of building products such as plasterboards includes the mixing of a gypsum slurry within a mixer. Various types of mixer are well known in the art, with the most common types being tangential outlet mixers and bottom outlet mixers. Where a bottom outlet mixer is used, a hose is connected to the bottom of the mixer to channel the gypsum slurry from the mixer to a forming table. Alternatively, a tangential outlet mixer can be used. Gypsum slurry exits from the side of a tangential outlet mixer, before moving into a hose via a canister.

CA 3,074,828 discloses a slurry delivery conduit of a mixer and a slurry delivery method.

US 2019/154181 discloses a gooseneck pipe for use with centre pivot irrigation.

US 2004/079428 discloses blood flow tubing and other tubing carrying fluids essential to life.

JP S56/171 ,493 discloses a vinyl pipe used as a water supply or drainage pipe.

## Summary of the Invention

The Applicant has found that where a bottom outlet mixer is used, the rotational motion of the gypsum slurry in the mixer propagates through the hose, resulting in a significant rotational component in the flow of the gypsum slurry within the hose.

The Applicant has also discovered that a rotational component exists within a hose connected to a tangential outlet mixer. Here, the canister introduces a rotational component into the flow of the gypsum slurry. As such, whether a bottom outlet or tangential outlet mixer is used, the gypsum slurry entering the hose has a rotational component to its flow.

The rotational component associated with the gypsum flow can prove problematic when producing building products. Where the gypsum slurry exits the hose on to a forming table via a single outlet, the rotational component of the fluid flow can result in an uneven spread of the gypsum slurry across the forming table. In cases where the gypsum slurry exits the hose on to the forming table via multiple outlets, the rotational component present in the flow of the gypsum slurry can result in even greater problems. Here, different volumes of gypsum slurry can exit each individual outlet, challenging when an even spread of gypsum slurry across the forming table is required.

In view of the above, reducing the rotational component in the flow of a gypsum slurry within a hose is desirable. The Applicant has come to understand that a reduction in the rotational component of the gypsum slurry within the hose can result in a more uniform spread of gypsum slurry across a forming table. The present invention seeks to address at least this problem.

According to a first aspect of the present invention, there is provided a hose for use in the production of a building product from a gypsum slurry, the hose comprising a first section comprising a cross sectional area $A_1$ and a second section comprising a cross section area $A_2$, the first section in fluid communication with the second section, wherein, in use, the first section is located upstream of the second section, wherein $A_1$ is at least twice the size of $A_2$ wherein the hose comprises a third section comprising a cross sectional area $A_3$ located intermediate the first section and the second section, wherein the first section is connected to the third section by an elbow, wherein the first section comprises a longest dimension $d_1$ in a plane perpendicular to its longitudinal axis, and wherein the elbow comprises an external radius of curvature $R_{Ex}$ at least half $d_1$ characterised in that the longitudinal axis of the first section lies generally perpendicular to the longitudinal axis of the third section and the longitudinal axis of the second section, and the longitudinal axis of the second section lies generally parallel to the longitudinal axis of the third section.

In this way, there is provided a hose which increases the homogeneity with which a fluid, most commonly a gypsum slurry, is spread across a surface. The Applicant has conducted numerical modelling and physical experimentation that indicates the provision of hose with the above features has improved flow characteristics. The Applicant considers these improved flow characteristics are due to a number of phenomena within the claimed hose, with the most important of these features being the creation of a recirculation zone within the body of the hose which acts to break the rotational component of the fluid flow as it enters the hose. Typically, in the production of a building product from a gypsum slurry, this rotational component is introduced into the gypsum flow via a bottom outlet mixer or the canister of a tangential outlet mixer.

Preferably $A_1$ is the maximum cross sectional area of the first section. Preferably, $A_2$ is the minimal cross sectional area of the second section.

$A_1$ is at least twice the size of $A_2$. More preferably, $A_1$ is at least three times the size of $A_2$. Where the dimensions of the hose satisfy these limits, the recirculation zone within the hose is larger and more significant, ensuring the rotational component of the gypsum flow is broken more effectively, increasing the homogeneity of any flow exiting the hose.

Preferably, $A_1$ is at most four times the size of $A_2$. Whilst the Applicant's modelling work indicates that the beneficial effect of increasing the ratio of $A_1$ to $A_2$ continues above this value, this upper limit is often preferred as it ensures the hose can be fitted to existing plasterboard production systems, and does not become unnecessarily bulky.

The hose comprises a third section comprising a cross sectional area $A_3$ located intermediate the first section and the second section. Preferably, $A_1$ is the same size or larger than $A_3$. Preferably, $A_1$ is at most four times the size of $A_3$. Where $A_3 \leq A_1 \leq 4A_3$, the fluid flow in the hose generates vorticity when it encounters the restriction of the third section. This vorticity effectively counteracts the rotational component of a fluid as it enters the restriction, resulting in a well-balanced flow exiting the hose. Preferably, $A_3$ is the minimum cross sectional area of the third section.

The longitudinal axis of the first section lies generally perpendicular to the longitudinal axis of the third section. The longitudinal axis of the first section lies generally perpendicular to the longitudinal axis of the second section. The longitudinal axis of the second section lies generally parallel to the longitudinal axis of the third section.

The first section is connected by an elbow to the third section. Preferably, the first section comprises a longest dimension $d_1$ in a plane perpendicular to its longitudinal axis. $d_1$ is the longest dimension of the first section in a plane perpendicular to its longitudinal axis, where said plane is that plane of the first section closest to the elbow. The elbow comprises an external radius of curvature at least half $d_1$. Preferably, the elbow comprises an external radius of curvature at most twice $d_1$. Advantageously, a radius of curvature within this range increases the size of the recirculation zone within the hose.

Preferably, the elbow comprises a continuous external radius of curvature. Alternatively, the elbow comprises a variable external radius of curvature.

Preferably, the elbow comprises an internal radius of curvature ($R_{In}$), wherein the internal radius of curvature is equal to the external radius of curvature minus $d_1$. When the external of curvature radius is smaller or equal to $d_1$, the internal radius of curvature is equal to zero. Preferably, the internal radius of curvature lies in the range $0 \leq R_{In} \leq d_1$. More preferably, the internal radius of curvature is equal to zero.

Preferably, the second section comprises at least two subsections, with the total cross sectional area of the subsections being equal to $A_2$. Where the second section comprises a plurality of subsections, $A_2$ is taken to be the cumulative, total cross section area of all subsections. Where the second section contains a plurality of subsections, an uneven spread of fluid exiting the hose can often be visualised as different volumes of fluid exiting each individual outlet. Where the second section comprises a single outlet, without subsections, the uneven spread of fluid exiting the second section can often be observed via the preferential spread of the fluid over a forming table or similar.

Preferably, the subsections diverge as they extend away from the first section. Preferably, the cross sectional area of each subsection within the plurality of subsections is substantially equal.

Preferably, the first section comprises a substantially circular cross section. Preferably, the second section comprises a substantially circular cross section. Preferably the third section comprises a substantially circular cross-section. Preferably, the subsections within the plurality of subsections comprise a substantially circular cross section. Any combination of the described cross sections is envisaged.

Preferably the first section has substantially the same cross sectional area along the majority of its length. More preferably, the first section has substantially the same cross sectional area along at least 75% of its length. Still more preferably, the first section has substantially the same cross sectional area along at least 90% of its length. Most preferably, the first section has substantially the same cross sectional area along its entire length.

Preferably the second section has substantially the same cross sectional area along the majority of its length. More preferably, the second section has substantially the same cross sectional area along at least 75% of its length. Still more preferably, the second section has substantially the same cross sectional area along at least 90% of its length. Most preferably, the second section has substantially the same cross sectional area along its entire length.

Preferably, where the second section comprises a plurality of subsections, each subsection has substantially the same cross sectional area along the majority of its length. More preferably, each subsection has substantially the same cross sectional area along at least 75% of its length. Still more preferably, each subsection has substantially the same cross sectional area along at least 90% of its length. Most preferably, each subsection has substantially the same cross sectional area along its entire length.

Preferably the third section has substantially the same cross sectional area along the majority of its length. More preferably, the third section has substantially the same cross sectional area along at least 75% of its length. Still more preferably, the third section has substantially the same cross sectional area along at least 90% of its length. Most preferably, the third section has substantially the same cross sectional area along its entire length.

Preferably, the second section extends below the plane which contains the longitudinal axis of the third section. Preferably, the second section is longer than the first section. Preferably, the hose comprises plastic. More preferably, the hose consists essentially of plastic.

Preferably, the hose comprises a plane of mirror symmetry. More preferably, the longitudinal axis of the first section, the second section or the third section lies in the plane of mirror symmetry.

A second aspect of the present invention is found in the use of the hose as previously described in the manufacture of a building product.

According to a third aspect of the invention, there is provided a method of dispensing a gypsum slurry including providing a hose according to the first aspect of the invention.

The method is a method of dispensing a gypsum slurry to produce a gypsum based product.

According to a fourth aspect of the present invention, there is provided a method of manufacturing a gypsum product comprising the steps of mixing a gypsum slurry in a mixer, exiting the gypsum slurry from the mixer through a hose as previously described on to a forming table and setting the gypsum slurry.

Preferably, the step of setting the gypsum slurry comprises heating the slurry.

Preferably, the step of mixing the slurry comprises mixing the slurry in a tangential outlet mixer or a bottom outlet mixer.

Preferably, the gypsum slurry comprises foam. More preferably, the method comprises adding foam to the gypsum slurry in the canister of a tangential outlet mixer. Foam is used to reduce the density of gypsum products. Lightweight gypsum products are made by including increased amounts of foam.

## Detailed Description

Embodiments of the present invention will now be described by way of example only and with reference to the accompanying drawings, in which:

Figure 1 is an image of a prior art hose in use in the manufacture of a building product;

Figure 2 is an image of a hose according to the present invention in use in the manufacture of a building product;

Figure 3 is a graph illustrating the right/left flow heterogeneity of numerically modelled hose systems;

Figure 4 is a graph illustrating the effect of varying the ratio of $A_1$ to $A_2$ on the modelled flow rate deviation;

Figure 5 is a graph illustrating the effect of varying the ratio of $A_1$ to $A_3$ on the modelled flow rate deviation; and

Figure 6 is a graph illustrating the effect of varying the external radius of curvature of the elbow section on the modelled flow rate deviation.

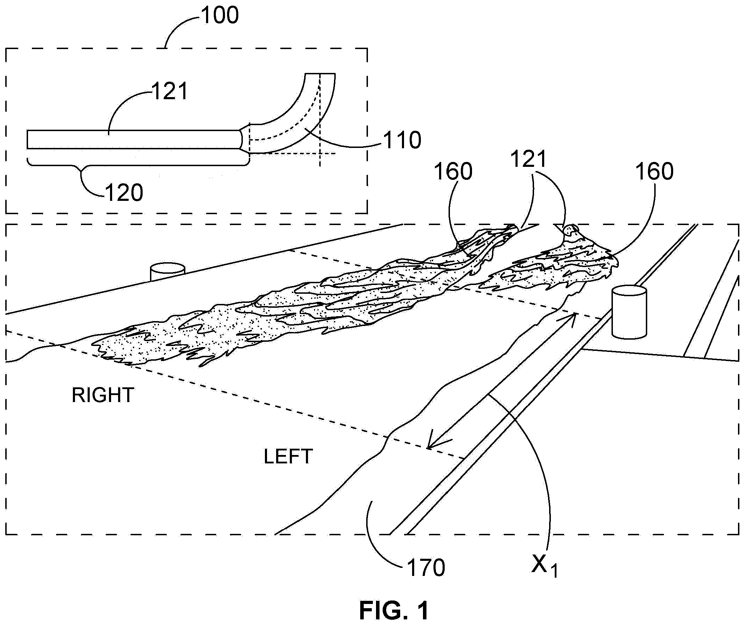

Turning first to Figure 1, there is depicted a boot or hose 100 as is known in the prior art. As can be seen from the inset of Figure 1, the hose comprises a first section 110 and a second section 120 comprising two subsections 121. The first section 110 and the second section 120 are in fluid communication, and the first section 110 is connected to the canister (not shown) of a tangential outlet mixer (not shown).

As can be seen from Figure 1, the hose 100 is in use dispensing a gypsum slurry 160 on to a forming table 170 as part of a building product manufacturing process. Here the building product being formed is a lightweight plasterboard.

Figure 1 further illustrates the uneven nature with which this prior art hose 100 dispenses the gypsum slurry 160 on to the forming table 170. The flow of gypsum slurry 160 from the right subsection 121 of the second section 120 is far greater than the flow of gypsum slurry 160 exiting the left subsection 121 of the second section 120, as can be seen by the distance the gypsum slurry 160 from each subsection 121 extends along the length of the forming table 170. The distance between the ends of the gypsum slurries extending from each subsection is marked as $X_1$ on Figure 1.

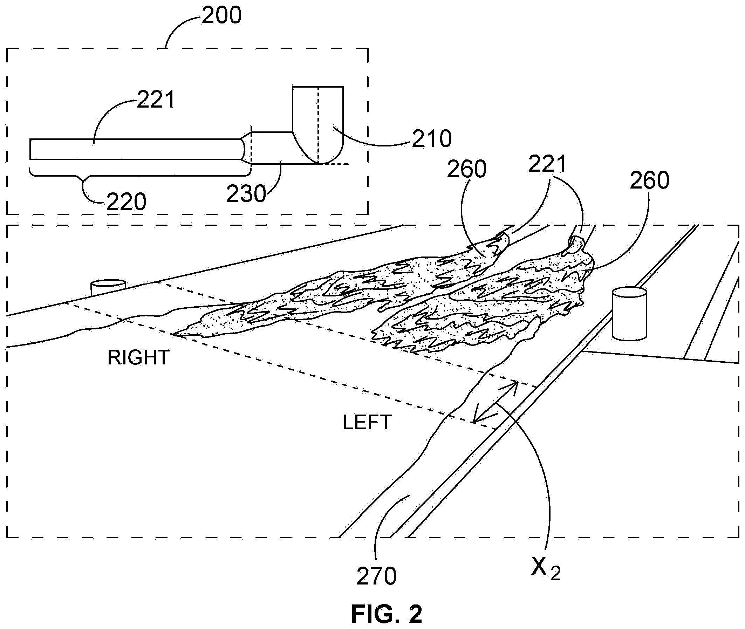

Turning now to Figure 2, there is depicted a hose 200 according to the present invention. As can be seen from the inset of Figure 2, the hose comprises a first section 210, a second section 220 comprising two subsections 221 and a third section 230 located between the first section 210 and the second section 220. Each of the first section 210, the second section 220 and the third section 230 are in fluid communication with one another, and the first section 210 is connected to the canister (not shown) of a tangential outlet mixer (not shown). The hose further comprises an elbow which connects the first section 210 to the third section 230.

As can be seen from Figure 2, the boot or hose 200 is in use dispensing a gypsum slurry 260 on to a forming table 270 as part of a building product manufacturing process. Here the building product being formed is again a lightweight plasterboard with the same formulation as was used to produce Figure 1.

As opposed to Figure 1, Figure 2 illustrates that the hose 200 dispenses the gypsum slurry 260 far more evenly across the forming table than the prior art hose 100 of Figure 1. Whilst the flow of gypsum slurry 260 from the right subsection 221 of the second section 220 is still greater than the flow of gypsum slurry 260 exiting the left subsection 221 of the second section 220, the difference between the two subsections 221 is greatly reduced. Length $X_2$ is far less than length $X_1$, indicating hose 200 greatly increases the uniformity of flow through the two subsections 221.

Whilst hose 200 has a clear advantage over prior art hose 100, the two hoses differ from one another in a number of design features. As such, to isolate the design features that contribute the improved flow characteristics of the hose 200, numerical modelling was undertaken.

## Numerical Modelling

### A Base Model

To ensure a reliable data, as a first stage numerical models were developed to replicate the physical results observed in Figures 1 and 2. With this aim, numerical modelling was undertaken using a continuous one-phase model using the ANSYS Fluent computational dynamics software package. Within the framework of the model, the foamed gypsum slurry used in the trials depicted in Figures 1 and 2 was modelled as an effective incompressible fluid with a non-Newtonian rheology. Additionally, the rheological law used in the model was Herschel-Bulkley rheology, with the coefficients used in the model based upon experimental measurements performed with a lab rheometer

Additionally, to replicate the trial conditions use to produce the images of Figure 1 and Figure 2, the numerical model focuses on a system using a tangential outlet mixer and a canister. In such a system, a rotational flow component is introduced to the gypsum slurry by the canister. In alternative systems where a bottom outlet mixer is used, the mixer itself is responsible for a rotational flow component in the gypsum slurry as it enters a hose. As such, whilst the numerical models discussed herein focus on the use of a tangential outlet mixer, the results also hold for bottom outlet mixers as both mixer variations introduce equivalent rotational components into the flow of a gypsum slurry within a hose.

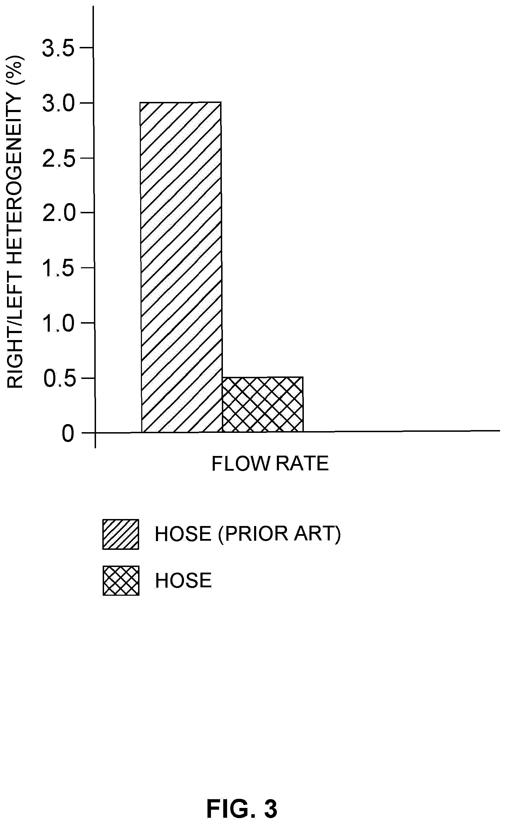

To compare the effect of the prior art hose 100 of Figure 1 with the hose 200 depicted in Figure 2, both were modelled and simulations completed. The results of these simulations are depicted in Figure 3.

Figure 3 depicts the heterogeneity of the flow exiting the right and left subsections in both the prior art hose 100 and the hose 200 of Figure 2. When calculating the heterogeneity of the flow rate, the flow rate though each subsection was calculated using the equation below:

$$Q_{Slurry} = \int_{\Omega} u_t d\Omega$$

where $u_t$ is the local velocity transverse to the cross-sectional area and $\Omega$ is the integration area of the cross-section. The right/left heterogeneity was then determined as a percentage difference between the left and right subsection flow rates.

As can be seen from Figure 3, the numerical model was successful in replicating the results seen during use of the prior art hose 100 and the hose 200 of Figure 2. As a baseline model had been successfully established, a parametric study was conducted to isolate the features of the hose 200 which produced the observed reduction in flow rate heterogeneity.

**Parametric Study**

Within the parametric analysis, the prior art hose 100 seen in Figure 1 was taken as a baseline. Various dimensions and features of the prior art hose 100 were varied individually and in turn to isolate those which affected the right/left heterogeneity of the hose.

During the course of the parametric study, the following features were determined to affect the right/left heterogeneity of the hose.

**First Section and Second Section** - **Ratio of Cross Sectional Areas**

The parametric study revealed that the ratio of the cross sectional area of the first section ($A_1$) to the size of the cross sectional area of the second section ($A_2$) had the greatest influence on the right/left homogeneity of the hose. In these calculations, $A_1$ was taken to be the total cross sectional area of the first section. $A_2$ was taken as the total cross sectional area of the second section, in this case the sum of the cross sectional areas of both subsections of the hose.

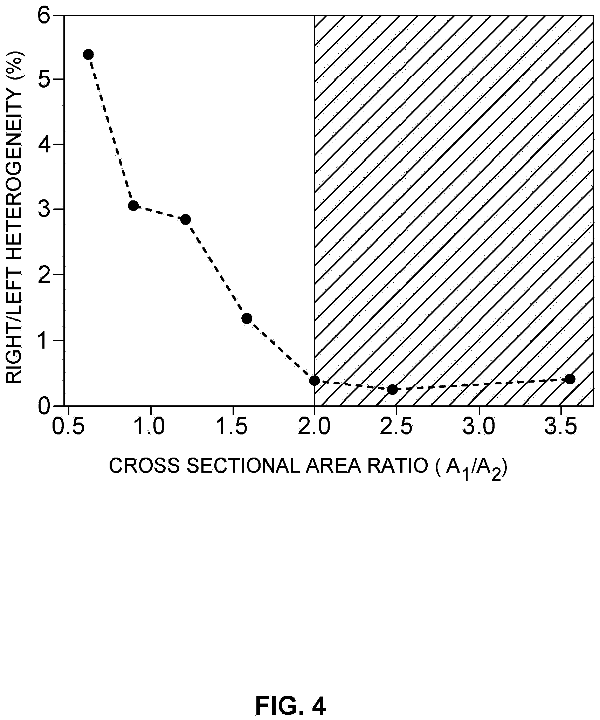

As can be seen in Figure 4, improvements in the right/left heterogeneity can be seen when the ratio of $A_1$ to $A_2$ reaches one. However, the greatest improvement in right/left heterogeneity can be seen when the ratio of $A_1$ to $A_2$ is two or above.

The ratio of $A_1$ to $A_2$ has a very strong effect on the right/left heterogeneity of the hose, and controlling this ratio alone is sufficient to reduce the right/left heterogeneity of a hose to an acceptable level. From an analysis of the numerical data, the Applicant hypothesises that the reduced heterogeneity seen when the $A_1$ to $A_2$ ratio is increased is due to the creation of a recirculation zone within the hose. The Applicant believes this recirculation zone disrupts the rotational component of the flow of the gypsum slurry as it enters the hose. This disruption of the rotational component of the fluid flow is effective in reducing the vorticity of the gypsum slurry, whatever its source: either directly from the mixer (as in a bottom outlet mixer) or as a result of the canister (as in a tangential outlet mixer). As such, increasing the ratio of $A_1$ to $A_2$ improves the homogeneity of flow exiting the hose for both tangential outlet and bottom outlet mixers.

**First Section and Third Section** - **Ratio of Cross Sectional Areas**

The parametric study further revealed that the ratio of the cross sectional area of the first section ($A_1$) to the size of the cross sectional area of the third section ($A_3$) also influenced the right/left homogeneity of the modelled hose. In these calculations, $A_1$ was again taken to be the total cross sectional area of the first section. Additionally, $A_3$ was taken to be the total cross section area of the third section.

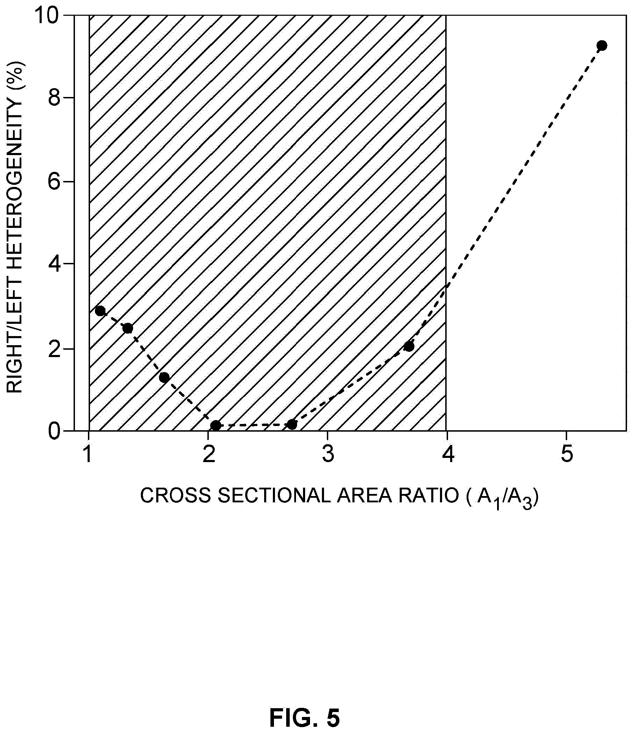

The parametric study revealed, as illustrated in Figure 5, that improvements in the right/left homogeneity of the modelled hose are seen when the ratio of $A_1$ to $A_3$ reaches one. A more dramatic improvement in the right/left homogeneity of the modelled hose can be seen when the ratio of $A_1$ to $A_3$ lies in the range two to three. Finally, the numerical modelling undertaken indicated that the right/left homogeneity of the modelled hose decreased again once the ratio of $A_1$ to $A_3$ exceeded four.

Whilst the controlling the $A_1$ to $A_3$ ratio has a strong effect on the right/left homogeneity of the hose, controlling this ratio is not as powerful as controlling the $A_1$ to $A_2$ ratio. From an analysis of the numerical data, the Applicant hypothesises that the changes in the right/left heterogeneity observed when varying the $A_1$ to $A_3$ ratio are the result of variations in the recirculation seen in the elbow of the hose. As previously discussed, the gypsum slurry entering the hose from the canister of a tangential mixer has a rotational component to its flow. The same is also true if the gypsum slurry enters the hose directly from a bottom outlet mixer.

Where $A_3$ is smaller than $A_1$, or the same size as $A_1$, the gypsum slurry flow generates vorticity when it encounters the restriction of the third section. Within the range highlighted in Figure 5, the Applicant believes this vorticity effectively counteracts the rotational component of the gypsum slurry as it enters the restriction, resulting in a well-balanced flow. Where the ratio of $A_1$ to $A_3$ increases beyond that highlighted in Figure 5, the right/left heterogeneity increase again, apparently due to the large change in cross sectional area upon entry into the third section introducing its own rotational component to the flow.

### The Elbow - External Radius of Curvature

Certain embodiments of the present invention include an elbow or transition which either (1) connects the first section to the second section, where there are only two sections, or (2) connects the first section to the third section, where there are three sections. In these embodiments, the elbow has a direct influence on the right/left heterogeneity of the hose.

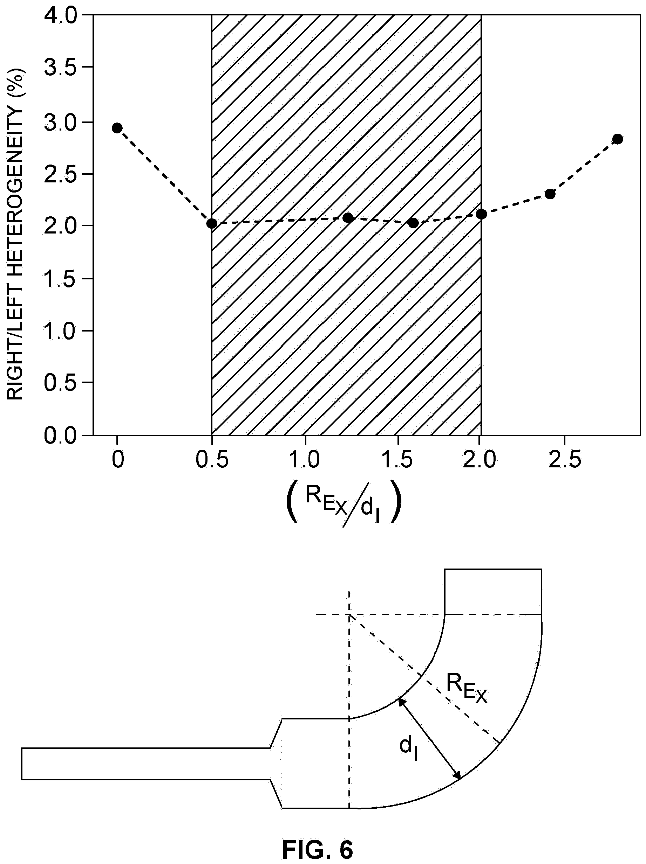

The shape of the elbow, and the transition between the first section and the third section, can be described by the elbow's external radius of curvature $R_{Ex}$. The external radius of curvature of the elbow is measured as the maximum radius of curvature of the elbow, as illustrated in Figure 6.

Where the elbow was present, the parametric study revealed that modifying $R_{Ex}$ could improve the right/left homogeneity of the flow. These effects are also illustrated in Figure 6. Where the first section was taken to have a longest internal dimension in a plane perpendicular to its longitudinal axis of $d_1$, the numerical modelling undertaken illustrated that improvements in the right/left heterogeneity were seen when $R_{Ex}$ was equal to half $d_1$. The numerical modelling undertaken indicates these improvements remained present where $R_{Ex}$ was equal to twice $d_1$, before decreasing. These findings are illustrated in Figure 6.

Again, the numerical model illustrates that controlling $R_{Ex}$ in relation to $d_1$ has an effect on the right/left homogeneity of the hose. However, this effect is less pronounced than both varying the $A_1$ to $A_2$ ratio and varying the $A_1$ to $A_3$ ratio. Furthermore, the analysis conducted by the Applicant further suggests that controlling $R_{Ex}$ in relation to $d_1$ has no effect on the right/left heterogeneity of a hose unless control of the $A_1$ to $A_2$ ratio has already introduced a recirculation zone into the hose.

The numerical modelling conducted by the Applicant suggests that the improvement in right/left heterogeneity seen in the range

$$\frac{d_1}{2} \le R_{Ex} \le 2d_1$$

is due to the extension of the recirculation zone within the hose. This extension of the recirculation zone ensures the rotational component of the gypsum slurry flow entering the hose is broken before the gypsum slurry reaches the second section, increasing flow homogeneity.

### Claims

1. A hose (200) for use in the production of a building product from a gypsum slurry, the hose (200) comprising:

   a first section (210) comprising a cross sectional area $A_1$,
   and a second section (220) comprising a cross section area $A_2$,
   said first section (210) in fluid communication with said second section (220), wherein, in use, said first section (210) is located upstream of said second section (220),
   wherein $A_1$ is at least twice the size of $A_2$
   wherein said hose (200) comprises a third section (230) comprising a cross sectional area $A_3$ located intermediate said first section (210) and said second section (220),
   wherein said first section (210) is connected to said third section (230) by an elbow,
   wherein said first section (210) comprises a longest dimension $d_1$ in a plane perpendicular to its longitudinal axis, and wherein said elbow comprises an external radius of curvature $R_{Ex}$ at least half $d_1$;
   **characterised in that**
   the longitudinal axis of said first section (210) lies generally perpendicular to the longitudinal axis of said third section (230) and the longitudinal axis of said second section (220), and the longitudinal axis of said second section (220) lies generally parallel to the longitudinal axis of said third section (230).

2. The hose (200) of claim 1, wherein $A_1$ is at most four times the size of $A_2$.

**3.** The hose (200) of claim 1 or claim 2, wherein $A_1$ is the same size or larger than $A_3$.

**4.** The hose of any one preceding claim, wherein $A_1$ is at most four times the size of $A_3$.

**5.** The hose (200) of any one preceding claim, wherein said elbow comprises an external radius of curvature $R_{Ex}$ at most twice $d_1$.

**6.** The hose of any one preceding claim, wherein said second section (220) comprises at least two subsections (221), with the total cross sectional area of said subsections (221) being equal to $A_2$.

**7.** The hose (200) of claim 6, wherein the cross sectional area of each subsection within the plurality of subsections (221) is substantially equal.

**8.** A method of dispensing a gypsum slurry including providing a hose with a plurality of distribution portions, wherein the hose is the hose (200) of any one preceding claim, wherein the ratio of $A_1$ to $A_2$ is such that flow asymmetry in said distribution portions is below 1%.

**9.** A method of manufacturing a gypsum product, the method comprising the steps of,

mixing a gypsum slurry (260) in a mixer,
exiting said gypsum slurry (260) from said mixer through the hose (200) of any one of claims 1 to 7 on to a forming table (270),
setting said gypsum slurry (260).

**10.** The method of claim 8, wherein said method is a method of dispensing a gypsum slurry (260) to produce a gypsum based product.

**11.** The method of claim 10 wherein said method comprises:

providing a mixer,
Providing a forming table (270), and
dispensing said gypsum slurry (260) from said mixer through said hose on to said forming table (270).

**Patentansprüche**

**1.** Ein Schlauch (200) zur Verwendung bei der Produktion eines Bauprodukts aus einem Gipsschlamm, wobei der Schlauch (200) Folgendes beinhaltet:

einen ersten Abschnitt (210), der eine Querschnittsfläche $A_1$ beinhaltet,
und einen zweiten Abschnitt (220), der eine Querschnittsfläche $A_2$ beinhaltet,
wobei der erste Abschnitt (210) in Fluidverbindung mit dem zweiten Abschnitt (220) steht, wobei sich der erste Abschnitt (210) im Einsatz stromaufwärts von dem zweiten Abschnitt (220) befindet,
wobei $A_1$ mindestens doppelt so groß wie $A_2$ ist,
wobei der Schlauch (200) einen dritten Abschnitt (230) beinhaltet, der eine Querschnittsfläche $A_3$ beinhaltet, der sich zwischen dem ersten Abschnitt (210) und dem zweiten Abschnitt (220) befindet,
wobei der erste Abschnitt (210) mittels eines Krümmers mit dem dritten Abschnitt (230) verbunden ist, wobei der erste Abschnitt (210) eine längste Abmessung $d_1$ in einer senkrecht zu seiner Längsachse liegenden Ebene beinhaltet, und wobei der Krümmer einen äußeren Krümmungsradius $R_{Ex}$ beinhaltet, der mindestens die Hälfte von $d_1$ beträgt;
**dadurch gekennzeichnet, dass**
die Längsachse des ersten Abschnitts (210) im Allgemeinen senkrecht zur Längsachse des dritten Abschnitts (230) und zur Längsachse des zweiten Abschnitts (220) liegt und die Längsachse des zweiten Abschnitts (220) im Allgemeinen parallel zur Längsachse des dritten Abschnitts (230) liegt.

**2.** Schlauch (200) gemäß Anspruch 1, wobei $A_1$ höchstens viermal so groß wie $A_2$ ist.

**3.** Schlauch (200) gemäß Anspruch 1 oder Anspruch 2, wobei $A_1$ gleich groß oder größer als $A_3$ ist.

**4.** Schlauch gemäß einem der vorhergehenden Ansprüche, wobei $A_1$ höchstens viermal so groß wie $A_3$ ist.

**5.** Schlauch (200) gemäß einem der vorhergehenden Ansprüche, wobei der Krümmer einen äußeren Krümmungsradius $R_{Ex}$ beinhaltet, der höchstens das Doppelte von $d_1$ beträgt.

**6.** Schlauch gemäß einem der vorhergehenden Ansprüche, wobei der zweite Abschnitt (220) mindestens zwei Unterabschnitte (221) beinhaltet, wobei die gesamte Querschnittsfläche der Unterabschnitte (221) gleich $A_2$ ist.

**7.** Schlauch (200) gemäß Anspruch 6, wobei die Querschnittsfläche von jedem Unterabschnitt in der Vielzahl von Unterabschnitten (221) im Wesentlichen gleich ist.

**8.** Verfahren zum Ausgeben eines Gipsschlamms, das das Bereitstellen eines Schlauchs mit einer Vielzahl von Verteilungsteilabschnitten umfasst, wobei der Schlauch der Schlauch (200) gemäß einem der vorhergehenden Ansprüche ist, wobei das Verhältnis von $A_1$ zu $A_2$ so ist, dass die Strömungsasymmetrie in den Verteilungsteilabschnitten unter 1 % liegt.

9. Ein Verfahren zur Herstellung eines Gipsprodukts, wobei das Verfahren die folgenden Schritte beinhaltet:

   Mischen eines Gipsschlamms (260) in einem Mischer,
   Austretenlassen des Gipsschlamms (260) aus dem Mischer durch den Schlauch (200) gemäß einem der Ansprüche 1 bis 7 auf einen Formtisch (270),
   Erstarrenlassen des Gipsschlamms (260).

10. Verfahren gemäß Anspruch 8, wobei das Verfahren ein Verfahren des Ausgebens eines Gipsschlamms (260) zum Produzieren eines Produkts auf Gipsbasis ist.

11. Verfahren gemäß Anspruch 10, wobei das Verfahren Folgendes beinhaltet:

   Bereitstellen eines Mischers;
   Bereitstellen eines Formtisches (270) und
   Ausgeben des Gipsschlamms (260) aus dem Mischer durch den Schlauch auf den Formtisch (270).

**Revendications**

1. Un tuyau (200) pour son utilisation dans la production d'un produit de bâtiment à partir d'une pâte de gypse, le tuyau (200) comprenant :

   une première section (210) comprenant une aire de section transversale $A_1$,
   et une deuxième section (220) comprenant une aire de section transversale $A_2$,
   ladite première section (210) étant en communication fluidique avec ladite deuxième section (220), dans lequel,
   lors de l'utilisation, ladite première section (210) est située en amont de ladite deuxième section (220),
   dans lequel $A_1$ fait au moins deux fois la taille de $A_2$
   ledit tuyau (200) comprenant une troisième section (230) comprenant une aire de section transversale $A_3$ située entre ladite première section (210) et ladite deuxième section (220), ladite première section (210) étant raccordée à ladite troisième section (230) par un coude, ladite première section (210) comprenant une dimension la plus longue $d_1$ dans un plan perpendiculaire à son axe longitudinal, et ledit coude comprenant un rayon de courbure extérieur $R_{Ex}$ d'au moins la moitié de $d_1$ ;
**caractérisé en ce que**
l'axe longitudinal de ladite première section (210) se trouve généralement perpendiculaire à l'axe longitudinal de ladite troisième section (230) et l'axe longitudinal de ladite deuxième section (220), et
l'axe longitudinal de ladite deuxième section (220) se trouve généralement parallèle à l'axe longitudinal de ladite troisième section (230).

2. Le tuyau (200) de la revendication 1, dans lequel $A_1$ fait au plus quatre fois la taille de $A_2$.

3. Le tuyau (200) de la revendication 1 ou de la revendication 2, dans lequel $A_1$ fait la même taille ou est plus grande que $A_3$.

4. Le tuyau d'une quelconque revendication précédente, dans lequel $A_1$ fait au plus quatre fois la taille de $A_3$.

5. Le tuyau (200) d'une quelconque revendication précédente, dans lequel ledit coude comprend un rayon de courbure extérieur $R_{Ex}$, d'au moins deux fois $d_1$.

6. Le tuyau d'une quelconque revendication précédente, dans lequel ladite deuxième section (220) comprend au moins deux sous-sections (221), l'aire de section transversale totale desdites sous-sections (221) étant égale à $A_2$.

7. Le tuyau (200) de la revendication 6, dans lequel l'aire de section transversale de chaque sous-section au sein de la pluralité de sous-sections (221) est sensiblement égale.

8. Un procédé de distribution d'une pâte de gypse incluant la fourniture d'un tuyau avec une pluralité de portions de répartition, le tuyau étant le tuyau (200) d'une quelconque revendication précédente, le rapport de $A_1$ à $A_2$ étant tel que l'asymétrie d'écoulement dans lesdites portions de répartition soit au-dessous de 1 %.

9. Un procédé de fabrication d'un produit de gypse, le procédé comprenant les étapes de mélangeage d'une pâte de gypse (260) dans un mélangeur,

   d'évacuation de ladite pâte de gypse (260) dudit mélangeur à travers le tuyau (200) de l'une quelconque des revendications 1 à 7 sur une table de formage (270),
   de prise de ladite pâte de gypse (260).

10. Le procédé de la revendication 8, ledit procédé étant un procédé de distribution d'une pâte de gypse (260) afin de produire un produit à base de gypse.

11. Le procédé de la revendication 10, ledit procédé comprenant :

la fourniture d'un mélangeur,
la fourniture d'une table de formage (270), et
la distribution de ladite pâte de gypse (260) à partir dudit mélangeur à travers ledit tuyau sur ladite table de formage (270).

**FIG. 1**

**FIG. 2**

**FIG. 3**

FIG. 4

**FIG. 5**

FIG. 6

**REFERENCES CITED IN THE DESCRIPTION**

**Patent documents cited in the description**

- CA 3074828
- US 2019154181 A
- US 2004079428 A
- JP S56171493 A